# EUROPÄISCHE PATENTANMELDUNG

(11) **EP 1 903 660 A1**
(43) Veröffentlichungstag der Anmeldung: **26.03.2008**
(21) Anmeldenummer: 07016796.0
(22) Anmeldetag: 28.08.2007
(51) Int. Cl.: H02J 7/14, B60R 16/02

(54) **Anordnung zum Laden von zumindest einer Akkumulatoreneinheit in einem Fahrzeug**

(30) Priorität: 20.09.2006 DE 102006044108
(71) Anmelder: MAN Nutzfahrzeuge Aktiengesellschaft, 80995 München (DE)
(72) Erfinder: Eisermann, Günter, 85757 Karlsfeld (DE); Fink, Johannes, 85241 Hebertshausen (DE)

(57) **Zusammenfassung**

Die Erfindung betrifft eine Anordnung zum Laden von zumindest einer Akkumulatoreinheit in einem Fahrzeug mit zumindest einem Stromversorgungskreis zur Versorgung von zumindest einem im Fahrzeug vorgesehenen elektrischen Verbraucher mit elektrischer Energie, wobei der Stromversorgungskreis über eine Schaltung durch zumindest eine Akkumulatoreinheit oder eine Generatoreinheit mit elektrischer Energie gespeist wird.

Die Schaltung weist zumindest ein erstes Schaltmittel zur Trennung der zumindest einen Akkumulatoreinheit vom Stromversorgungskreis und zumindest ein zweites Schaltmittel zur Herstellung eines getrennt vom Stromversorgungskreis vorgesehenen Ladestromkreises zwischen der zumindest einen Akkumulatoreinheit und der Generatoreinheit oder zwischen der zumindest einen Akkumulatoreinheit und einem Ladegerät auf, wobei über den Ladestromkreis ein Laden der zumindest einen Akkumulatoreinheit erfolgt.

## Beschreibung

Die Erfindung betrifft eine Anordnung zum Laden von zumindest einer Akkumulatoreinheit in einem Fahrzeug gemäß dem Oberbegriff des Patentanspruches 1.

Aus dem Stand der Technik sind bereits unterschiedliche Anordnungen zum Laden von Akkumulatoreinheiten in Nutzfahrzeugen wie Omnibussen und Lastkraftwagen bekannt. Bedingt durch das dynamische Verhalten derartiger Akkumulatoreinheiten sind im Rahmen des Ladeprozesses unterschiedlichste Faktoren, insbesondere die Temperatur der zu ladenden Akkumulatoreinheit, die Ladezeit, die Höhe des Ladestromes bzw. der Ladespannung zu berücksichtigen.

Beispielsweise ist aus der DE 101 59 796 A1 eine Stromversorgungseinrichtung mit zwei Akkumulatoreneinheiten sowie zwei Generatoreinheiten für Nutzfahrzeuge bekannt, bei dem ein Anlasserstromkreis und ein Karosseriestromkreis vorgesehen sind. Ferner weist die Einrichtung eine Schaltung auf, über die die durch die beiden Generatoreneinheiten erzeugte elektrische Energie je nach Bedarf auf die beiden Stromkreise verteilbar ist.

Ferner ist der DE 10 2004 057 828 A1 ebenfalls eine Anordnung mit mehreren Generatoreinheiten sowie zumindest einer Akkumulatoreinheit in einem Kraftfahrzeug zu entnehmen, welche eine Schaltung zur Versorgung mehrerer im Fahrzeug vorgesehener Stromkreise mit elektrischer Energie aufweist.

Die zum Laden einer derartigen Akkumulatoreinheit vorgesehene Ladespannung ist zunächst abhängig von der durch die Generatoreinheit erzeugten Generatorspannung. Insbesondere wird die effektive Ladespannung durch die physikalischen Eigenschaften der zur Übertragung der Generatorspannung an die Akkumulatoreinheit vorgesehenen elektrischen Verbindungsleitungen, insbesondere deren Länge, Querschnitt bzw. Material beeinflusst.

Bei Verkabelungskonzepten, in welchen beispielsweise die elektrischen Verbindungsleitungen gleichzeitig mit den Anschlussklemmen der Akkumulatoreinheit sowie mit einem im Fahrzeug vorgesehnen Generatoreinheit verbunden sind, d.h. die elektrische Verbindungsleitungen für die Bereitstellung der Versorgungsspannung, insbesondere der Bordnetzspannung als auch zur Übertragung der Ladespannung bzw. des Ladestromes vorgesehen sind, liegt die elektrische Last der im Nutzfahrzeug vorgesehenen Verbraucher direkt an der Akkumulatoreinheit bzw. unmittelbar vor der Akkumulatoreinheit an, wodurch in den genannten elektrischen Verbindungsleitungen ein erheblicher Spannungsverlust entsteht.

Ausgehend vom genannten Stand der Technik liegt der vorliegenden Erfindung die Aufgabe zugrunde, eine Anordnung der eingangs genannten Art zu schaffen, bei welcher ein vom Stromversorgungskreis unabhängiges Laden der in einem Fahrzeug vorgesehenen Akkumulatoreinheiten innerhalb kürzester Zeit möglich ist.

Die Aufgabe wird ausgehend vom Oberbegriff des Patentanspruches 1 durch dessen kennzeichnende Merkmale gelöst. Vorteilhafte Weiterbildungen der Erfindung sind den abhängigen Ansprüchen zu entnehmen.

Der wesentliche Aspekt der erfindungsgemäßen Anordnung ist darin zu sehen, dass die Schaltung zumindest ein erstes Schaltmittel zur Trennung der zumindest einen Akkumulatoreinheit vom Stromversorgungskreis und zumindest ein zweites Schaltmittel zur Herstellung eines getrennt vom Stromversorgungskreis vorgesehenen Ladestromkreises zwischen der zumindest einen Akkumulatoreinheit und der Generatoreinheit oder zwischen der zumindest einen Akkumulatoreinheit und einem Ladegerät aufweist, wobei über den Ladestromkreis ein Laden der zumindest einen Akkumulatoreinheit erfolgt. Vorteilhaft wird eine Schaltungsanordnung mit steuerbaren Schaltmitteln beschrieben, welche bei einem Überschreiten einer vorgegebenen Generatorspannung und/oder Versorgungsspannung und/oder einer vorgegebenen Motordrehzahl eine Trennung des Ladestromkreises von dem Stromversorgungskreis ermöglicht und hierdurch ein Laden der Akkumulatoreinheit mit einer im Vergleich zur Versorgungsspannung erhöhten Ladespannung über einen getrennt vom Stromversorgungskreis verlaufenden Ladestromkreis durchführt.

Im Folgenden wird an einem Ausführungsbeispiel die Erfindung anhand von Zeichnungen näher erläutert. Es zeigen:
- Fig. 1: beispielhaft in einem schematischen Blockschaltbild eine Schaltungsanordnung zum Laden zumindest einer Akkumulatoreinheit über die Generatoreinheit, und
- Fig.2: beispielhaft in einem schematischen Blockschaltbild eine alternative Schaltungsanordnung mit integrierten Ladegerät zum Laden zumindest einer Akkumulatoreinheit.

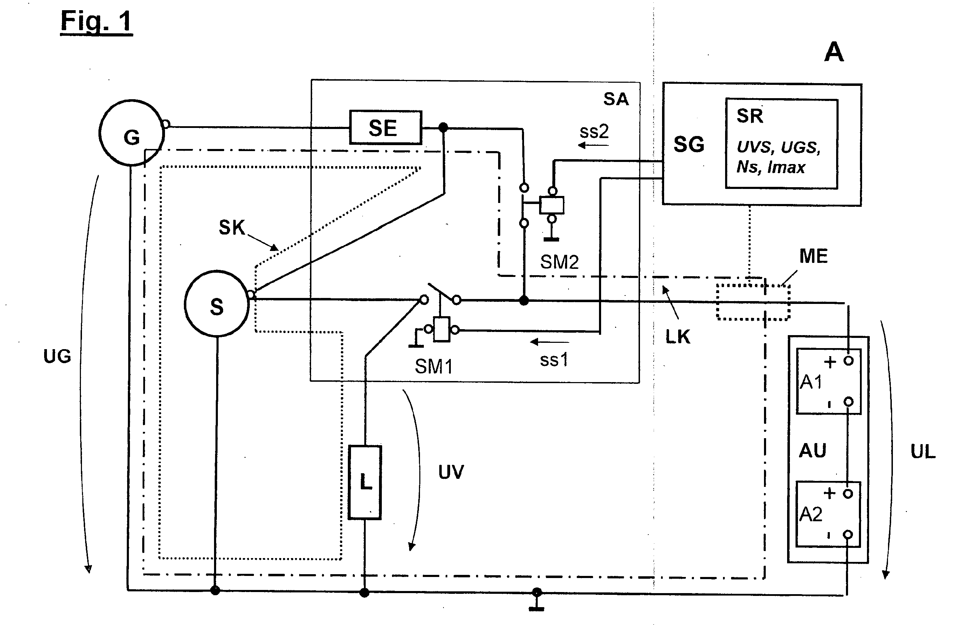

In Fig. 1 ist beispielhaft in einem schematischen Blockschaltbild eine Schaltungsanordnung A in einem Fahrzeug, insbesondere Nutzfahrzeug mit zumindest einer Schaltung SA dargestellt, an welche zumindest eine Akkumulatoreinheit AU, eine Startereinheit S, ein Steuergerät SG und eine Generatoreinheit G über elektrische Verbindungsleitungen anschließbar sind.

Über die Schaltungsanordnung A wird in an sich bekannter Weise zumindest ein in einem Stromversorgungskreis SK angeordneter elektrischer Verbraucher L über die Akkumulatoreinheit AU oder die Generatoreinheit G mit elektrischer Energie versorgt. Ein Stromversorgungskreis SK ist in Figur 1 stellvertretend für ggf. mehrere Leistungs- und Aufbaustromkreise in einem Fahrzeug schematisch dargestellt.

Über die Schaltung SA ist die Akkumulatoreinheit AU mit der Generatoreinheit G und der Startereinheit S verbindbar, wobei über die Schaltung SA der Stromversorgungskreis SV mit elektrischer Energie versorgbar ist, und zwar wahlweise über die zumindest eine Akkumulatoreinheit AU oder die Generatoreinheit G.

Die Startereinheit S wird über einen Anlasserkreis (nicht in Figur 1 eingezeichnet) zum Start einer im Nutzfahrzeug vorgesehenen Motoreinheit angesteuert, welche hierzu über die Schaltung SA mit der Generatoreinheit G verbunden ist. Zusätzlich ist die Startereinheit S mit der Akkumulatoreinheit AU verbunden, über welche die zum Start erforderliche Versorgungsspannung UV bereitgestellt wird.

Zum Anlassen der Motoreinheit, insbesondere Verbrennungsmotoreinheit wird die Startereinheit S während des Startvorganges solange aus der Akkumulatoreinheit AU des Nutzfahrzeuges mit elektrischer Energie versorgt, bis die Motordrehzahl n der Motoreinheit einen vorgegebenen Wert erreicht hat, der gewährleistet, dass die an die Motoreinheit gekoppelte Generatoreinheit G die elektrische Energieversorgung innerhalb des Nutzfahrzeuges übernehmen kann und den für den Normalbetrieb der im Nutzfahrzeuges vorhandenen elektrischen Verbrauchern L erforderliche Versorgungsspannung UV bereitstellt.

Im vorliegenden Ausführungsbeispiel ist die Generatoreinheit G derart ausgelegt, dass bei Motorleerlauf oder ab einer vorgegebenen Motordrehzahl n durch die Generatoreinheit G neben der maximal durch die im Nutzfahrzeug vorgesehenen Verbraucher L beanspruchte elektrische Energie noch ein ausreichender Energieüberschuss vorhanden ist, der zum Laden der Akkumulatoreinheit AU verwendet werden kann.

Gemäß einer ersten Ausführungsform der Erfindung weist die Schaltung SA ein erstes Schaltmittel SM1 auf, über welches eine elektrische Verbindung zwischen der Startereinheit S und der Akkumulatoreinheit AU hergestellt werden kann. Durch Schließen des vorzugsweise als Schaltrelais ausgebildeten ersten Schaltmittels SM1 wird zusätzlich der Stromversorgungskreis SK über die Akkumulatoreinheit AU mit elektrischer Energie beispielsweise einer vorgegebenen Versorgungsspannung UV versorgt. Durch Öffnen des ersten Schaltmittels SM1 wird der Stromversorgungskreis SK von der Akkumulatoreinheit AU getrennt. Zur Steuerung des ersten Schaltmittels SM1 ist das Steuergerät SG vorgesehen, über welches vorgegebene Parameter der Schaltungsanordnung SA ermittelt und ausgewertet werden können.

Ferner ist die Generatoreinheit G mit der Startereinheit S über ein Sicherungselement SE, beispielsweise eine in Nutzfahrzeugen übliche Sicherung sowie mit der Akkumulatoreinheit AU über ein zweites Schaltmittel SM2 verbunden. Durch Schließen des zweiten Schaltmittels SM2, welches ebenfalls vorzugsweise als Schaltrelais ausgebildet ist, kann ein getrennt vom Stromversorgungskreis SK geführter Ladestromkreis LK hergestellt werden, über welchen beispielsweise wie in Figur 1 dargestellt durch die Generatoreinheit G eine Versorgung der Akkumulatoreinheit AU mit elektrischer Energie erfolgt.

Bei geschlossenem zweiten Schaltmittel SM2 und dadurch durchgeschalteten Ladestromkreis LK liegt an der Akkumulatoreinheit AU eine Ladespannung UL an, welche sich aus der Generatorspannung UG abzüglich dem Spannungsabfall resultierend aus dem sich aufgrund der Länge und dem Querschnitt der Verbindungsleitungen ergebenden Leitungswiderstand sowie den zwischen der Generatoreinheit G und der Akkumulatoreinheit AU fließenden Ladestrom ergibt. Durch die Generatoreinheit AU wird somit neben dem Laststrom zum Betrieb der Verbraucher L auch der zum Laden der Akkumulatoreinheit AU erforderliche Ladestrom zur Verfügung gestellt.

Zur Steuerung des ersten und zweiten Schaltmittels SM1, SM2 ist das Steuergerät SG zur Ausführung einer Steuerroutine SR eingerichtet, welche den Wert der von der Generatoreinheit G bereitgestellten Generatorspannung UG ermittelt und abhängig davon ein erstes und zweites Steuersignal ss1, ss2 zum Schalten des ersten und zweiten Schaltmittels SM1, SM2 bereitstellt. Das erste und zweite Steuersignal ss1, ss2 werden anschließend über Steuerleitungen an das erste bzw. zweite Schaltmittel SM1, SM2 übertragen.

Überschreitet beispielsweise die ermittelte Generatorspannung UG eine vorgegebene Soll-Generatorspannung UGS von beispielsweise U = > 26,5 V, so wird durch die Steuerroutine SR zunächst ein erstes Steuersignal ss1 erzeugt, welches ein Öffnen des ersten Schaltmittels M1 bewirkt. Hierdurch wird die Akkumulatoreinheit AU vom Stromversorgungskreis SK getrennt, d.h. die Versorgung des Stromversorgungskreises SK mit elektrischer Energie erfolgt ausschließlich über die durch die Generatoreinheit G, und zwar wird durch diese ein entsprechende Versorgungsspannung UV bereitgestellt.

Alternativ oder zusätzlich kann durch die Steuerroutine SR ermittelt werden, ob die aktuelle Versorgungsspannung UV eine vorgegebene Soll-Versorgungsspannung UVS von beispielsweise U = > 26 V überschreitet und abhängig davon das erste Steuersignal ss1 erzeugt werden, welches ein Öffnen des ersten Schaltmittels M1 bewirkt.

Im Anschluss daran wird durch das Steuergerät SG bzw. die ausgeführte Steuerroutine SR ein zweites Steuersignal ss2 erzeugt, welches an das zweite Schaltmittel SM2 übertragen wird. Abhängig von dem erzeugten zweiten Steuersignal ss2 wird das zweite Schaltmittel SM2 geschlossen und hierdurch ein getrennt vom Stromversorgungskreis SK verlaufender Ladestromkreis LK hergestellt, welcher die Generatoreinheit G über das Sicherungselement SE mit der Akkumulatoreinheit AU verbindet, worüber ein Laden der Akkumulatoreinheit AU erfolgt. Fällt die Generatorspannung UG unter die genannte Soll-Generatorspannung UGS ab, so wird gesteuert durch die Steuerroutine SR das erste Schaltmittel SM1 wiederum geschlossen und anschließend das zweite Schaltmittel SM2 geöffnet.

Das zweite Schaltmittel SM2 ist insbesondere beim Motorstart geöffnet, um den Ladestromkreis LK vom Anlasserkreis zu trennen und hierdurch zu verhindern, dass durch den parallelen Leitungsverlauf auch ein Anteil des hohen Starterstromes zum Start der Generatoreinheit G über den geringer dimensionierte Verbindungsleitungen aufweisenden Ladestromkreis LK fließt und zu dessen Beschädigung führt.

Zusätzlich oder alternativ kann durch das Steuergerät SG bzw. die darin ausgeführte Steuerroutine SR die aktuelle Motordrehzahl n ermittelt werden und abhängig davon das erste und zweite Steuersignal ss1, ss2 zum Schalten des ersten und zweiten Schaltmittels SM1, SM2 gebildet werden. Hierbei wird wiederum die ermittelte Motordrehzahl n mit einer vorgegebenen Soll-Motordrehzahl ns, beispielsweise 800 U/min verglichen und bei einem Überschreiten der genannten Soll-Motordrehzahl ns ein erstes und zweites Steuersignal ss1, ss2 zum Öffnen des ersten Schaltmittels SS1 und Schließen des zweiten Schaltmittels SM2 erzeugt.

In einer bevorzugten Ausführungsform ist zwischen dem ersten Schaltmittel SM1 und der Akkumulatoreinheit AU, und zwar im Ladestromkreis LK eine Messeinheit ME vorgesehen, welche mit dem Steuergerät SG verbunden ist. Mittels der Messeinheit ME wird die Richtung des Stromflusses gemessen und dem Steuergerät SG angezeigt. Hierdurch kann über das Steuergerät SG bzw. die darin ausgeführte Steuerroutine SR ermittelt werden, ob ein Ladestrom- oder Entladestromfluss vorliegt, d.h. ein Laden oder Entladen der Akkumulatoreinheit AU aktuell erfolgt.

Abhängig von der Stromflussrichtung kann alternativ oder zusätzlich das Schalten der ersten und zweiten Schaltmittel SM1, SM2 über das erste und zweite Steuersignal ss1, s2 gesteuert werden. Insbesondere kann die Schaltung des ersten Schaltmittels SM1 abhängig vom Überschreiten eines maximalen Stromwertes Imax erfolgen, bei dessen Überschreiten eine Beschädigung des Ladestromkreises LK bzw. zu dessen Herstellung vorgesehenen elektrischen Verbindungsleitungen zu erwarten ist.

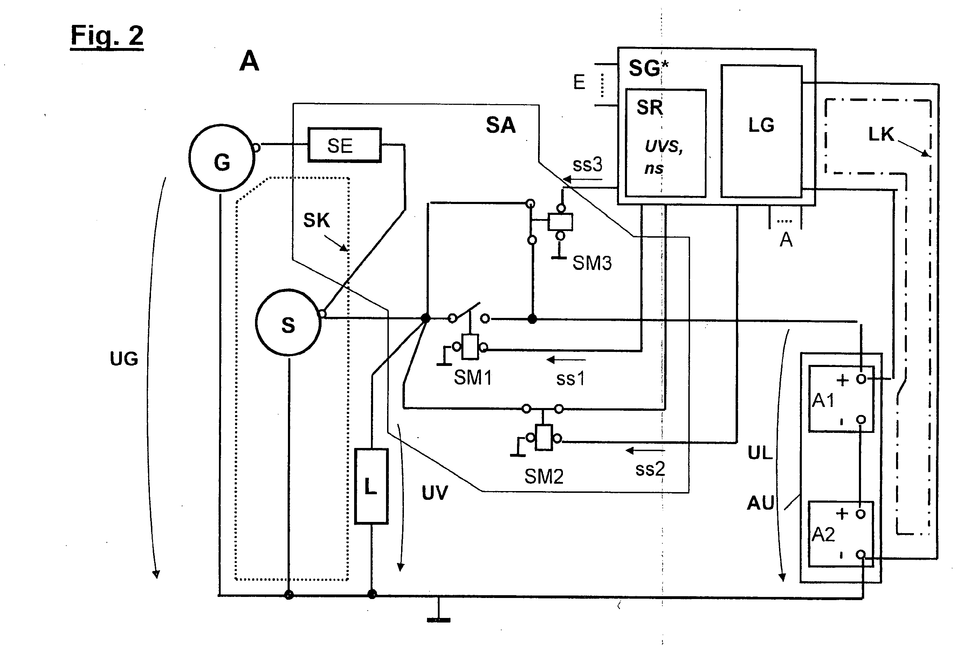

In Fig. 2 ist eine alternative Realisierung der Schaltungsanordnung SA dargestellt, bei dem in das Steuergerät SG* ein Ladegerät LG integriert ist. Alternativ kann ein separates Ladegerät LG vorgesehen werden, welches mit dem Steuergerät SG verbindbar ist.

An das Steuergerät SG* wird über das Ladegerät LG ein Ladestromkreis LK* zwischen der Akkumulatoreinheit AU und dem Ladegerät LG geschlossen, und zwar abhängig von der erzeugten Generatorspannung UG bzw. der anliegenden Versorgungsspannung UV.

Unterschiedlich zu der in Fig. 1 dargestellten Schaltung SA ist der Stromversorgungskreis SK bzw. die Startereinheit S über ein zweites Schaltmittel SM2 mit dem Ladegerät LG verbunden und zur Überbrückung des ersten Schaltmittels SM1 ein drittes Schaltmittel SM3 vorgesehen, welches eine Verbindung zwischen dem Stromversorgungskreis SK und der Akkumulatoreinheit AU auch bei geöffnetem ersten Schaltmittel SM1 ermöglicht.

Das dritte Schaltmittel SM3 ist vorzugsweise als Schaltrelais mit einer Widerstandskontaktbrücke ausgebildet, welches den Stromversorgungskreis SK mit der Akkumulatoreinheit AU verbindet, um einem plötzlichen Spannungseinbruch bedingt durch einen Motorstillstand oder sonstige Funktionsausfälle im Nutzfahrzeug zu verhindern. Um eine Überlagerung der über das Ladegerät LG erzeugten Ladespannung UL mit der Versorgungsspannung UV zu verhindern, verfügt das dritte Schaltmittel SM3 über eine Widerstandskontaktbrücke, welche beispielsweise als Spannungssenke wirkt. Alternativ kann diese Funktion auch mittels einem separaten Widerstand und einem einfachen Schaltrelais realisiert werden.

Das Ladegerät LG ist beispielsweise bei einer Versorgungsspannung UV von 26 V ladefähig und erzeugt eine Ladespannung UL von 32 V. Um die Funktion des Ladegerätes LG sicher zu stellen, ist eine ausreichende Generatorleistung bei Motorleerlauf erforderlich, welche die maximal erforderliche Bordnetzlast überschreiten sollte. Über das Ladegerät LG erfolgt ein Laden der Akkumulatoreinheit AU gemäß einer U/I-Kennlinie oder/und durch eine zeitlich begrenzte Schnellladung mit einer Ladespannung von UL > 30 V. Bei einem Spannungseinbruch der Versorgungsspannung UV unter beispielsweise 24,5 V wird das Ladegerät LG gesteuert über die Steuerroutine Sr automatisch abgeschaltet und die entsprechenden Steuersignale ss1, ss2 und ss3 zum Schließen des ersten Schaltmittels SM1 und Öffnen des zweiten und dritten Schaltmittels SM3 erzeugt.

Das Steuergerät SG* weist mehrere Eingänge E zum Empfang von u.a. durch die Generatoreinheit G, die Akkumulatoreinheit und die Startereinheit S bereitgestellte Signale auf. Beispielsweise wird die Temperatur der Akkumulatoreinheit AU, der aktuelle Motorbetriebszustand, der Generatorbetriebszustand sowie ausgewählte Betriebsparameter dem Steuergerät SG* angezeigt. Ferner sind mehrere Ausgänge A vorgesehen, über welche beispielsweise eine Balanceregelung des Ladeprozesses durchgeführt wird.

Befindet sich die Motoreinheit im Leerlauf und wird durch die Generatoreinheit UG eine Generatorspannung UG größer als die vorgegebene Soll-Generatorspannung UGS bereit gestellt, so wird gesteuert über das Steuergerät SG* das zweite und dritte Schaltmittel SM2, SM3 gesteuert über das zweite und dritte Steuersignal ss2, ss3 durchgeschaltet und das erste Schaltmittel SM1 gesteuert über das erste Steuersignal ss1 geöffnet. Abhängig vom Schaltzustand des zweiten Schaltmittels SM2 und der dadurch am Steuergerät SG anliegenden Versorgungsspannung UV wird durch das Ladegerät LG die Ladespannung UL bereitgestellt und somit ein Laden der Akkumulatoreinheit AU über den Ladestromkreis LK* durchgeführt.

Zusätzlich kann eine Messeinheit ME (nicht in Figur 2 dargestellt) zwischen dem dritten Schaltmittel SM3 und der Akkumulatoreinheit AU vorgesehen werden, über welche die Stromrichtung des fließenden Stromes und ggf. dessen Stromstärke ermittelt wird sowie dem Steuergerät SG* angezeigt wird. Bei Überschreiten einer maximalen Stromstärke Imax kann beispielsweise eine Deaktivierung bzw. Öffnen des zweiten und dritten Schaltmittels SM2, SM3 bei gleichzeitigem Schließen des ersten Schaltmittels SM1 gesteuert über die Steuerroutine SR erfolgen.

Mittels der beschriebenen Schaltungsanordnungen SA ist ein Laden der Akkumulatoreinheit AU mit einer maximalen Ladespannung unabhängig von den übrigen Versorgungsstromkreisen SK innerhalb eines Nutzfahrzeuges möglich. Hierdurch kann insbesondere auch vermeiden werden, dass die im Nutzfahrzeug vorgesehenen Verbraucher durch höhere Ladespannung UL eine Schädigung erfahren. Ferner ist eine Schnellladung der Akkumulatoreinheit AU möglich.

Die Akkumulatoreinheit AU kann beispielsweise aus zwei Akkumulatoren A1, A2 aufgebaut sein, welche beispielsweise als Hybridbatterien (NIMH) ausgebildet sind.

Die Erfindung wurde voranstehend an einem Ausführungsbeispiel beschrieben. Es versteht sich, dass zahlreiche Änderungen und Modifikationen möglich sind, ohne dass das der Erfindung zugrunde liegende Gedanke verlassen wird.

### Bezugszeichenliste

- A: Ausgänge
- A1: erster Akkumulator
- A2: zweiter Akkumulator
- AU: Akkumulatoreinheit
- E: Eingänge
- G: Generatoreinheit
- Imax: maximale Stromstärke
- L: elektrische Verbraucher
- LK, LK*: Ladestromkreis
- ME: Messeinheit
- n: Motordrehzahl
- ns: Soll-Motordrehzahl
- S: Startereinheit
- SA: Schaltungsanordnung
- SE: Sicherungselement
- SG, SG*: Steuergerät
- SK: Stromversorgungskreis
- SM1: erstes Schaltmittel
- SM2: zweites Schaltmittel
- SM3: drittes Schaltmittel
- SR: Steuerroutine
- ss1: erstes Steuersignal
- ss2: zweites Steuersignal
- ss3: drittes Steuersignal
- UG: Generatorspannung
- UGS: Soll-Generatorspannung
- UL: Ladespannung
- UV: Versorgungsspannung
- UVS: Soll-Versorgungsspannung

## Patentansprüche

1. Anordnung (A) zum Laden von zumindest einer Akkumulatoreinheit (AU) in einem Fahrzeug mit zumindest einem Stromversorgungskreis (SK) zur Versorgung von zumindest einem im Fahrzeug vorgesehenen elektrischen Verbraucher (L) mit elektrischer Energie, wobei der Stromversorgungskreis (SK) über eine Schaltung (SA) durch zumindest eine Akkumulatoreinheit (AU) oder eine Generatoreinheit (G) mit elektrischer Energie gespeist wird, **dadurch gekennzeichnet, dass** die Schaltung (SA) zumindest ein erstes Schaltmittel (SM1) zur Trennung der zumindest einen Akkumulatoreinheit (AU) vom Stromversorgungskreis (SK) und zumindest ein zweites Schaltmittel (SM2) zur Herstellung eines getrennt vom Stromversorgungskreis (SK) vorgesehenen Ladestromkreises (LK) zwischen der zumindest einen Akkumulatoreinheit (AU) und der Generatoreinheit (G) oder zwischen der zumindest einen Akkumulatoreinheit (AU) und einem Ladegerät (LG) aufweist, wobei über den Ladestromkreis (LK) ein Laden der zumindest einen Akkumulatoreinheit (AU) erfolgt.

2. Anordnung nach Anspruch 1, **dadurch gekennzeichnet, dass** ein Steuergerät (SG) zur Steuerung des ersten und zweiten Schaltmittels (SM1, SM2) abhängig von der durch die Generatoreinheit erzeugten Generatorspannung (UG) und/oder Versorgungsspannung (UV) und/oder der Motordrehzahl (n) einer im Fahrzeug vorgesehenen Motoreinheit vorgesehen ist.

3. Anordnung nach Anspruch 1 oder 2, **dadurch gekennzeichnet, dass** das Steuergerät (SG) zur Ermittlung und Auswertung der Generatorspannung (UG) und/oder Versorgungsspannung (UV) eingerichtet ist, wobei die ermittelte Generatorspannung (UG) und/oder Versorgungsspannung (UV) mit einer vorgegebenen Soll-Generatorspannung (UGS) und/oder Soll-Versorgungsspannung (UVS) verglichen wird und bei Überschreiten der Soll-Generatorspannung (UGS) und/oder Soll-Versorgungsspannung (UVS) ein erstes Steuersignal (ss1) zum Öffnen des ersten Schaltmittels (SM1) erzeugt wird.

4. Anordnung nach Anspruch 1 oder 2, **dadurch gekennzeichnet, dass** das Steuergerät (SG) zur Ermittlung und Auswertung der Motordrehzahl (n) der Motoreinheit eingerichtet ist, wobei die ermittelte Motordrehzahl (n) mit einer vorgegebenen Soll- Motordrehzahl (ns) verglichen wird und bei Überschreiten der Soll- Motordrehzahl (ns) durch die ermittelte Motordrehzahl (n) ein erstes Steuersignal (ss1) zum Öffnen des ersten Schaltmittels (SM1) erzeugt wird.

5. Anordnung nach einem der vorhergehenden Ansprüche, **dadurch gekennzeichnet, dass** zwischen dem ersten Schaltmittel (SM1) und der Akkumulatoreinheit (AU) eine Messeinheit (ME) vorgesehen ist, über welche die Stromflussrichtung und/oder die Stromstärke des fließenden Stromes gemessen wird und abhängig davon das erste und zweite Schaltmittel (SM1, SM2) gesteuert werden.

6. Anordnung nach einem der vorhergehenden Ansprüche, **dadurch gekennzeichnet, dass** das Ladegerät (LG) in das Steuergerät (SG) integriert oder mit diesem verbunden ist.

7. Anordnung nach einem der vorhergehenden Ansprüche, **dadurch gekennzeichnet, dass** das erste und zweite Schaltmittel (SM1, SM2) über das Steuergerät (SG) steuerbar sind.

8. Anordnung nach einem der vorhergehenden Ansprüche, **dadurch gekennzeichnet, dass** ein drittes über das Steuergerät (SG) steuerbares Schaltmittel (SM3) mit einer Widerstandskontaktbrücke zur Realisierung eine Spannungssenke zwischen dem Stromversorgungskreis (SK) und der Akkumulatoreinheit (AU) vorgesehen ist.

9. Anordnung nach einem der vorhergehenden Ansprüche, **dadurch gekennzeichnet, dass** die Generatoreinheit (G) zur Erzeugung einer Generatorspannung größer 26 V ausgebildet ist.

10. Nutzfahrzeug mit zumindest einer Anordnung (A) nach einem der vorhergehenden Ansprüche.
